# EUROPEAN PATENT APPLICATION

(11) **EP 3 086 086 A1**
(43) Date of publication of application: **26.10.2016**
(21) Application number: 14871691.3
(22) Date of filing: 13.11.2014
(51) Int. Cl.: G01B 11/25, G06T 1/00

(54) **MEASUREMENT DEVICE**

(30) Priority: 16.12.2013 JP 2013259122
(71) Applicant: Opton Co., Ltd., Seto-shi, Aichi 489-8645 (JP)
(72) Inventor: YOGO, Teruaki, Seto-shi, Aichi 489-8645 (JP); TANAKA, Hideyuki, Seto-shi, Aichi 489-8645 (JP)
(74) Representative: Roth, Klaus
(86) International application number: PCT/JP2014/080077
(87) International publication number: WO 2015/093194

(57) **Abstract**

A measurement apparatus comprises at least two or more radiation devices, at least two or more image capturing devices, and a measurement device. Each of the radiation devices radiates light such that a part of a radiation pattern overlaps a part of a radiation pattern from another one of the radiation devices on a measurement target. Each of the image capturing devices captures an image of a radiation region of the measurement target on which the radiation pattern of a specific wavelength light radiated by one of the radiation devices that is paired with the image capturing device is projected, through a specific wavelength pass filter that allows passage of light of a specific wavelength of the paired radiation device and blocks light of a wavelength except the specific wavelength.

## Description

### CROSS-REFERENCE TO RELATED APPLICATIONS

This international application claims the benefit of Japanese Patent Application No. 2013-259112 filed December 16, 2013 in the Japan Patent Office, and the entire disclosure of Japanese Patent Application No. 2013-259112 is incorporated herein by reference.

### TECHNICAL FIELD

The present invention relates to a measurement apparatus to measure a surface shape of a measurement target.

### BACKGROUND ART

Measurement apparatuses for measuring a surface shape of a measurement target by three-dimensional measurement have been known. A known measurement apparatus of this type includes an image capturing unit and a shape recognition device.

The image capturing unit is a unit that radiates light having a specified radiation pattern, and captures an image of a region to which the light having the radiation pattern is radiated. An example of a proposed image capturing unit includes a radiator and two image capturing devices (see Patent Document 1).

The radiator radiates a striped fringe-like (grating-like) light to a previously specified region. Each of the image capturing devices captures an image of a common region of a measurement target on which the fringe from the radiator is projected. The radiator and each of the image capturing devices are fixed to a frame at a previously specified distance and mounting angle therebetween. That is, the radiator and each of the two image capturing devices are arranged to have a previously specified positional relationship therebetween.

Also, the shape recognition device in the measurement apparatus described in Patent Document 1 recognizes a surface shape (a three-dimensional shape) of a measurement target on the basis of images captured by the respective image capturing devices by an active measurement method in three-dimensional measurement. That is, in the measurement apparatus described in Patent Document 1, the radiator and the two image capturing devices operate as one image capturing unit, and the surface shape of the measurement target is recognized on the basis of the images captured by the respective image capturing devices.

### PRIOR ART DOCUMENTS

### PATENT DOCUMENTS

Patent Document 1: Japanese Patent No. 3781438

### SUMMARY OF THE INVENTION

### PROBLEMS TO BE SOLVED BY THE INVENTION

Measurement targets whose surface shapes are to be measured by a measurement apparatus may include a measurement target that is large in size or a measurement target that has a complicated surface shape. In a case of measuring a surface shape of such a measurement target by the measurement apparatus described in Patent Document 1, it is necessary to move a position of the image capturing unit so as to sequentially radiate fringe-like light to a plurality of points and to capture respective images at the plurality of points.

Accordingly, the measurement apparatus described in Patent Document 1 has a problem in that measurement of a surface shape of a measurement target that is large in size or a measurement target that has a complicated surface shape requires a longer time to recognize the surface shape of the entire measurement target.

In one aspect of the present invention, it is desirable that a measurement apparatus be adapted to reduce as much as possible a time required to recognize a surface shape of a measurement target.

### MEANS FOR SOLVING THE PROBLEMS

In one aspect, a measurement apparatus according to the present invention comprises at least two or more radiation devices, at least two or more image capturing devices, and a measurement device.

Each of the radiation devices radiates a specific wavelength light, which is a light having a specified specific wavelength, with a set radiation pattern. Each of the image capturing devices is paired with a corresponding one of the radiation devices and arranged such that a positional relationship with the corresponding one of the radiation devices is a previously specified specific positional relationship. Each of the image capturing devices captures an image of a radiation region of a measurement target on which the radiation pattern of the specific wavelength light radiated by the corresponding one of the radiation devices is projected.

Also, in the one aspect of the measurement apparatus of the present invention, each of the radiation devices radiates the specific wavelength light having one of specific wavelengths specified to be different from one another, such that a part of the radiation pattern overlaps a part of a radiation pattern from another one of the radiation devices on the measurement target. Each of the image capturing devices captures an image of the radiation region of the measurement target on which the radiation pattern of the specific wavelength light radiated by the paired radiation device is projected, through a specific wavelength pass filter that allows passage of the light having the specific wavelength of the paired radiation device and blocks light of a wavelength except the specific wavelength.

The measurement device measures a surface shape of the measurement target in each of the radiation regions, on the basis of an image captured by each of the image capturing devices and of the specific positional relationship between each of the image capturing devices and the paired radiation device.

According to the measurement apparatus as described above, it is possible to capture images of a plurality of regions of the measurement target at the same time by a plurality of sets of paired radiation devices and image capturing devices. Further, according to the one aspect of the measurement apparatus of the present invention, it is unnecessary to move a set of paired radiation device and image capturing device when capturing images of a plurality of regions of the measurement target. Consequently, according to the one aspect of the measurement apparatus of the present invention, it is possible to recognize a surface shape over a wide area of the measurement target in a short time.

In other words, according to the one aspect of the measurement apparatus of the present invention, time required to recognize the surface shape of the measurement target can be reduced as much as possible.

In the measurement apparatus, in order to recognize an entire surface shape of the measurement target on the basis of respective images captured by a plurality of image capturing devices, it is necessary to integrate, on a single plane, the surface shapes of the measurement target in the respective radiation regions.

In the one aspect of the measurement apparatus of the present invention, the specific wavelength lights (radiation patterns) from the respective radiation devices are adapted to partially overlap each other on the measurement target. Accordingly, it is possible to easily integrate, on a single plane, surface shapes on the basis of the images captured by the respective image capturing devices with reference to specific points (for example, specific four points) in the mutually overlapping part.

Consequently, according to the one aspect of the measurement apparatus of the present invention, it is possible to easily recognize, as a surface shape in one space, the surface shapes in the respective radiation regions that have been recognized from a plurality of images.

Also, in the one aspect of the measurement apparatus of the present invention, the specific wavelengths of the specific wavelength lights radiated by the respective radiation devices have non-overlapping bandwidths. Therefore, according to the one aspect of the measurement apparatus of the present invention, if the specific wavelength lights (radiation patterns) from mutually different radiation devices overlap each other, occurrence of interference of light in an overlapping area can be reduced.

Thus, according to the one aspect of the measurement apparatus of the present invention, it is possible to reduce undesired deformation of the radiation patterns and to inhibit reduction in recognition accuracy of the surface shape of the measurement target.

As described above, according to the one aspect of the measurement apparatus of the present invention, it is possible to accurately recognize the surface shape over a wide area of the measurement target, and it is also possible to reduce time required to recognize the surface shape of the measurement target as much as possible.

Thus, when the measurement apparatus of the present invention is applied, for example, to an inspection process in a production line to produce a large amount of products, it is possible to perform rapid inspection of the surface shapes of the large amount of products.

According to the one aspect of the measurement apparatus of the present invention, if the measurement target has such a complicated surface shape that a set of a radiation device and an image capturing device has a blind area, another set of a radiation device and an image capturing device can cover the blind area. Thus, according to the one aspect of the measurement apparatus of the present invention, it is possible, even in a case of a measurement target having a complicated surface shape, to accurately recognize the surface shape of the measurement target.

In the one aspect of the measurement apparatus of the present invention, there may be provided housings that each house the radiation device and the image capturing device paired with each other while retaining the specific positional relationship therebetween.

In the measurement apparatus, if the positional relationship between the paired radiation device and image capturing device is changed from the specific positional relationship, accuracy of measurement of the surface shape of the measurement target is reduced. Possible factors for change of the positional relationship of the paired radiation device and image capturing device from the specific positional relationship may include expansion of a member to which the radiation device and the image capturing device are fixed due to temperature rise by heat generation of the radiation device and the image capturing device.

Therefore, in the one aspect of the measurement apparatus of the present invention, a cooling device that cools the radiation device and the image capturing device housed in the housing with air that is brought into the housing may be provided.

According to the measurement apparatus provided with such cooling device, it is possible to cool the radiation device and the image capturing device housed in the housing. Thus, it is possible to reduce expansion of the member (that is, the housing) to which the paired radiation device and image capturing device are fixed, and possible to inhibit reduction in accuracy of measurement of the surface shape of the measurement target.

In the one aspect of the measurement apparatus of the present invention, a first optical element and a second optical element may be provided. The first optical element is an optical element that is provided to each of the housings on a light path from the radiation device housed in the housing so as to form an outer surface of the housing. The second optical element is an optical element that is provided to each of the housings on a light path from outside the housing to the image capturing device housed in the housing so as to form an outer surface of the housing.

According to the measurement apparatus as above, light from the radiation device is radiated outward through the first optical element provided to the housing, whereas light enters the image capturing device through the second optical element provided to the housing.

Accordingly, if dust attaches the outer surfaces of the optical elements provided to the housing, a previously specified radiation pattern cannot be achieved, or an image captured by the image capturing device includes noise reflection. In this case, accuracy of measurement of the surface shape of the measurement target is reduced in the measurement apparatus.

In the one aspect of the measurement apparatus of the present invention, therefore, there may be provided a blowing device that blows out the air that has cooled the radiation device and the image capturing device housed in the housing by the cooling device toward outer surfaces of the first optical element and the second optical element.

According to the measurement apparatus provided with such blowing device, it is possible to inhibit attachment of dust on outer surfaces of the optical elements, and it is possible to inhibit reduction in accuracy of measurement of the surface shape of the measurement target.

Also, the present invention may be practiced in various forms, such as a program executed by a computer to measure a shape of a measurement target and a measurement method, other than the above described measurement apparatus.

### BRIEF DESCRIPTION OF THE DRAWINGS

FIG. 1 is an explanatory view schematically showing a configuration of a measurement apparatus.
FIG. 2 is an explanatory view illustrating a specific wavelength.
FIG. 3 is a perspective view of an image capturing unit provided in the measurement apparatus.
FIG. 4 is a block diagram showing a configuration of the image capturing unit.
FIG. 5 is an explanatory view illustrating radiation patterns to and radiation regions on a measurement target.
FIG. 6 is an explanatory view illustrating a configuration of a cooling and dust control mechanism, which is a cross sectional view of the image capturing unit showing an internal structure of the image capturing unit, that is, a cross sectional view taken along a line VI-VI in FIG. 2.
FIG. 7 is a perspective view showing an appearance of a front cover forming a part of a blowing portion.
FIG. 8 is a cross sectional view of the front cover and an annular member that form the blowing portion.

### EXPLANATION OF REFERENCE NUMERALS

1... measurement apparatus; 3... frame; 5 ... side wall portion; 9... top plate portion; 20, 50... image capturing unit; 22, 52... radiation device; 24, 54...light emitting portion; 26, 56...radiation pattern generator; 28, 58...first optical element; 30, 60...image capturing device; 32, 62...second optical element; 34, 64... specific wavelength pass filter; 36, 66... image capturing element; 42, 43... housing; 44, 45... case body; 46, 47... front cover; 48, 49 ... annular member; 70 ... shape measurement device; 71... ROM; 72... RAM; 73... CPU; 74... cooling and dust control mechanism; 76... suction portion; 78 ... fan; 80... air chamber; 82...dust control filter; 83 ... blowing portion; 84...vent hole; 88...vent path; 89...blowing outlet; 90...attachment hole; 100... measurement target

### MODE FOR CARRYING OUT THE INVENTION

Hereinafter, an embodiment as an example of the present invention will be described with reference to the drawings.

### <Measurement Apparatus>

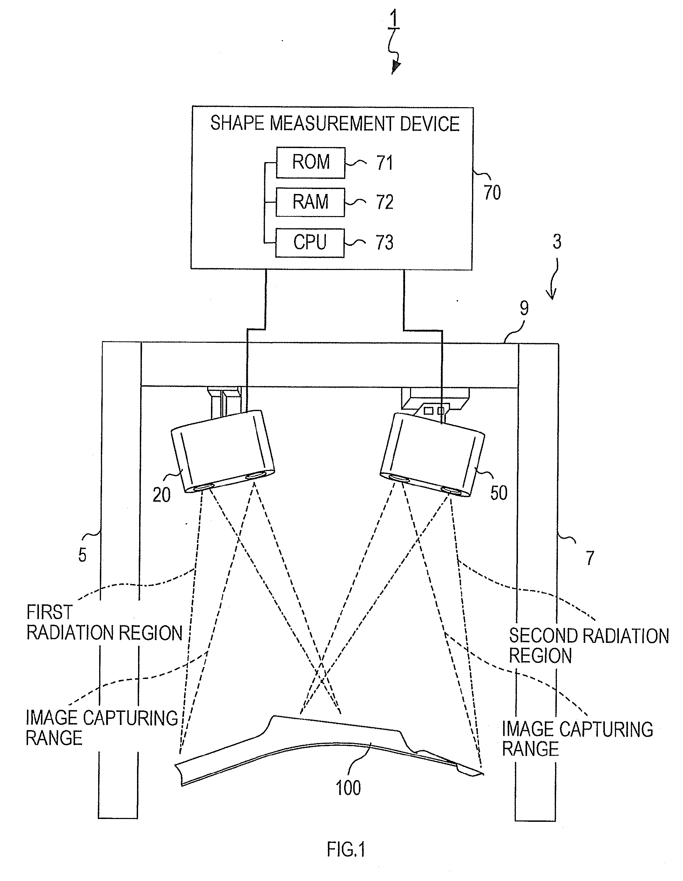

A measurement apparatus 1 shown in FIG. 1 is a system to measure a surface shape of a measurement target 100.

The measurement apparatus 1 comprises a frame 3, a first image capturing unit 20, a second image capturing unit 50, and a shape measurement device 70.

The frame 3 comprises side wall portions 5 and 7, and a top plate portion 9 extended between respective upper end portions of the side wall portions 5 and 7. In the present embodiment, the measurement target 100 is placed in an open space surrounded by the side wall portions 5 and 7, and the top plate portion 9.

The measurement target 100 is an object having an uneven surface. The measurement target 100 may be, for example, an industrial product that is mass produced in a factory.

Also, the measurement apparatus 1 may be used, in a situation where a large number of measurement targets 100 are sequentially moved, for measuring a surface shape of each of the measurement targets 100. Specifically, the measurement apparatus 1 may be used in an inspection process in a production line to produce the measurement targets 100, and the measurement targets 100 may be conveyed by a conveying device, such as a belt conveyer.

The first image capturing unit 20 radiates a light of a specific wavelength that is a wavelength of a previously specified band with a specified radiation pattern, and captures an image of a region to which the light of the specific wavelength is radiated. Hereinafter, the light radiated by the first image capturing unit 20 is referred to as a first specific wavelength light, and a wavelength of the first specific wavelength light is referred to as a first specific wavelength.

The second image capturing unit 50 radiates a light of a specific wavelength with a specified radiation pattern, and captures an image of a region to which the light of the specific wavelength is radiated. Hereinafter, the light radiated by the second image capturing unit 50 is referred to as a second specific wavelength light, and a wavelength of the second specific wavelength light is referred to as a second specific wavelength. The radiation of the second specific wavelength light by the second image capturing unit 50 is performed such that a part of the radiation pattern of the second specific wavelength light from the second image capturing unit 50 overlaps a part of the radiation pattern of the first specific wavelength light from the first image capturing unit 20.

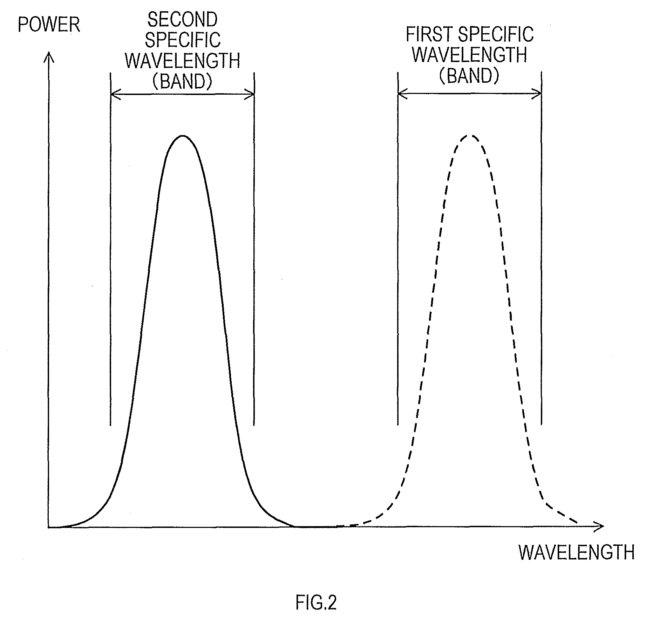

The second specific wavelength light here is a light of a wavelength in a different (that is, non-overlapping) bandwidth from the first specific wavelength as shown in FIG. 2.

In the present embodiment, the first specific wavelength is assumed to be a wavelength of red light, whereas the second specific wavelength is assumed to be a wavelength of blue light.

The first image capturing unit 20 is mounted to the frame 3. The mounting of the first image capturing unit 20 to the frame 3 is performed such that the radiation pattern by the first specific wavelength light is radiated to a first radiation region. The first radiation region is a previously specified region as a region to which the first specific wavelength light from the first image capturing unit 20 is radiated.

The second image capturing unit 50 is mounted to the frame 3. The mounting of the second image capturing unit 50 to the frame 3 is performed such that the radiation pattern by the second specific wavelength light is radiated to a second radiation region.

The second radiation region is a previously specified region as a region to which the second specific wavelength light from the second image capturing unit 50 is radiated. The second radiation region is specified such that a part of the second radiation region overlaps a part of the first radiation region on an outer surface of the measurement target 100.

The shape measurement device 70 measures (recognizes) the surface shape of the measurement target 100 according to a known three-dimensional image measurement method on the basis of respective images captured by the first image capturing unit 20 and 50.

In order to achieve this, the shape measurement device 70 is configured mainly with a known computer that comprises at least a ROM 71, a RAM 72, and a CPU 73 as shown in FIG. 1.

Among these, the ROM 71 stores processing programs and/or data, the stored contents of which should be retained even when power is turned off. The RAM 72 temporarily stores processing programs and/or data. The CPU 73 executes various processes according to the processing programs stored in the ROM 71 and/or the RAM 72.

The ROM 71 stores a processing program to enable the shape measurement device 70 to execute a shape recognition process for recognizing the surface shape of the measurement target 100 on the basis of the respective images captured by the image capturing units 20 and 50.

In the present embodiment, for the shape recognition process, a method (a so-called pattern projection method) is employed in which light with a radiation pattern previously formed in a grating shape is radiated to the measurement target 100, and the surface shape of the measurement target 100 is measured on the basis of a degree of deformation of the radiation pattern projected on the measurement target 100. One example of such pattern projection method may be the moire method. Since such method is well-known as described, for example, in Japanese Patent No. 3781438 and Japanese Patent No. 3519698, no further detailed description thereof is provided in the present embodiment.

### <Image Capturing Unit>

Next, a description will be given of the first image capturing unit 20.

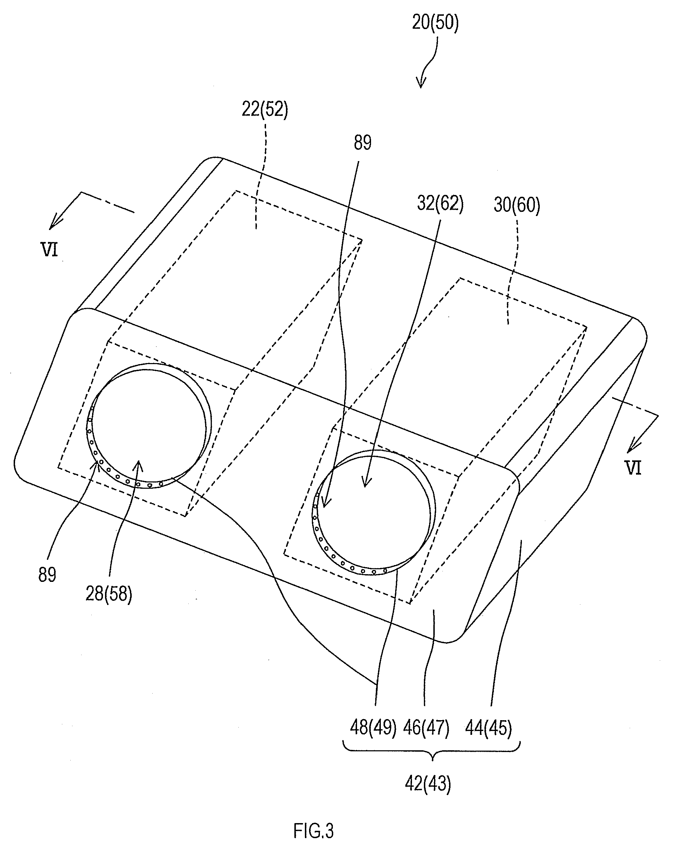

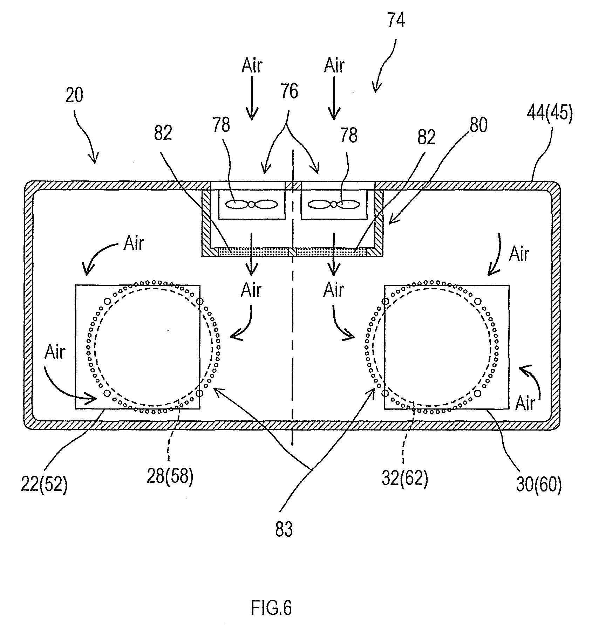

The first image capturing unit 20 shown in FIG. 3 comprises a radiation device 22, an image capturing device 30, a housing 42, and a cooling and dust control mechanism 74 (see FIG. 6).

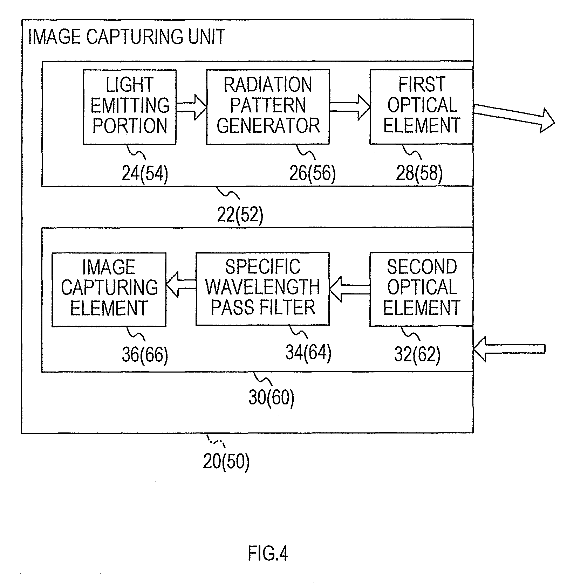

The radiation device 22 is a device that radiates the first specific wavelength light with the radiation pattern, and comprises a light emitting portion 24, a radiation pattern generator 26, and a first optical element 28 as shown in FIG. 4.

The light emitting portion 24 is a light emitting device that emits a light of the first specific wavelength as the first specific wavelength light. The light emitting portion 24 may be configured, for example, with a red light emitting diode or with a red light laser diode.

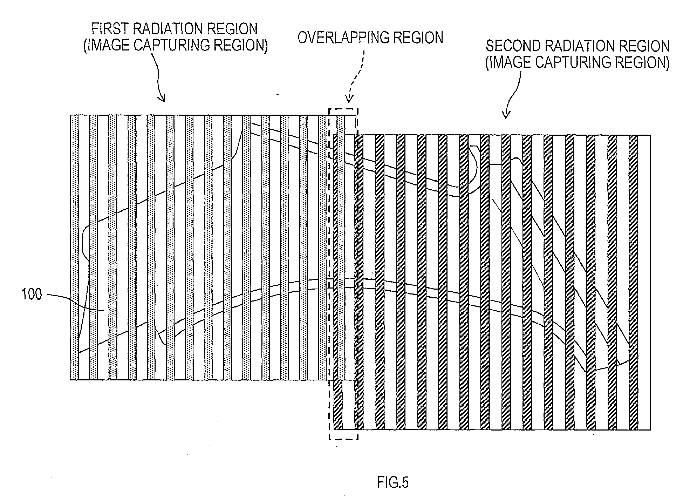

The radiation pattern generator 26 is a member with slits and/or holes formed so as to conform to the radiation pattern. The radiation pattern generator 26 achieves radiation of the specific wavelength light with the radiation pattern by passage of the specific wavelength light emitted by the light emitting portion 24 through the slits and/or holes formed in the radiation pattern generator 26. The radiation pattern in the present embodiment is grating-like as shown in FIG. 5. "Grating-like" here means, for example, fringe-like or having a grating pattern.

The first optical element 28 is at least one optical element to radiate the first specific wavelength light that is emitted from the light emitting portion 24 and passes through the radiation pattern generator 26 to the first radiation region. The first optical element 28 includes, for example, a lens.

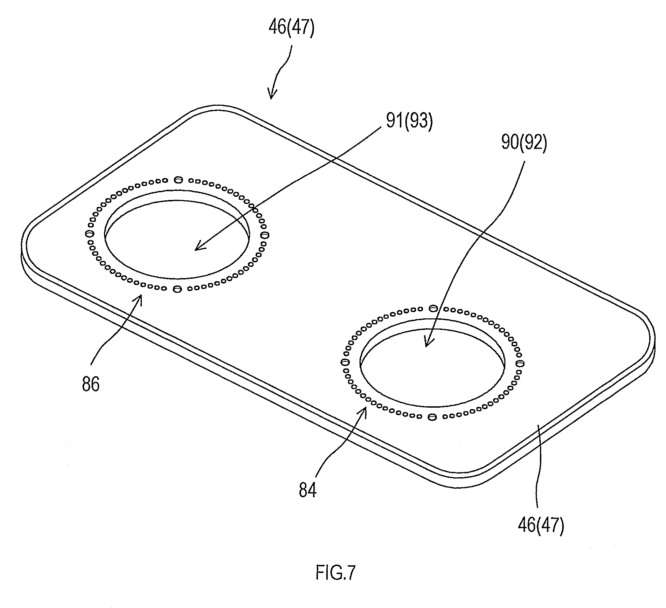

The first optical element 28 is arranged on a light path from the radiation device 22 housed in the housing 42 to the outside, and is fitted in an attachment hole 90 (see FIG. 7) in the front cover 46 so as to form an outer surface of the housing 42.

The image capturing device 30 captures an image of a region (hereinafter referred to as "a first image capturing region") of the measurement target 100 on which the first specific wavelength light radiated from the radiation device 22 is projected. The image capturing device 30 comprises a second optical element 32, a specific wavelength pass filter 34, and an image capturing element 36.

The second optical element 32 is at least one optical element to collect light from the first image capturing region. The second optical element 32 includes, for example, a lens. The second optical element 32 is arranged on a light path from outside the housing 42 to the image capturing device 30, and is fitted in an attachment hole 91 (see FIG. 7) in the front cover 46 so as to form an outer surface of the housing 42.

The specific wavelength pass filter 34 is a filter that allows passage of the light of the first specific wavelength emitted by the light emitting portion 24, and blocks light of a wavelength except the first specific wavelength.

The image capturing element 36 is a known image capturing element to form an image, and may include, for example, a CCD image sensor and/or a CMOS image sensor. The image capturing element 36 captures an image of the light that has passed the specific wavelength filter 34.

The housing 42, which is a case having an open space therein, comprises a case body 44, a front cover 46, and two annular members 48. The case body 44 is a case forming a rectangular parallelepiped shape having an open face. The front cover 46 is a plate-like member that covers the open face of the case body 44, and has attachment holes 90 and 91 bored therein. The annular members 48 are ring-shaped members to be fixed to respective peripheral edges of the attachment holes 90 and 91, and each have a thickness in a circumferential direction.

By assembling the first optical element 28 and the second optical element 32 in addition to the case body 44, the front cover 46, and the annular members 48, the housing 42 is formed as a closed container having no opening except for a later detailed inlet and blowing outlets 89.

The radiation device 22 and the image capturing device 30 are housed in the open space formed in the housing 42 so as to be held in a previously specified positional relationship (hereinafter referred to as a "specific positional relationship"). The specific positional relationship here means a positional relationship that is specified by at least a distance between the radiation device 22 and the image capturing device 30, and an angle (that is, a mounting angle) defined by a central axis of image capturing with respect to a radiation axis of the first specific wavelength light.

That is, the first image capturing unit 20 radiates the radiation pattern of the first specific wavelength light to the first radiation region. Also, the first image capturing unit 20 captures an image of a region of the measurement target 100 on which the radiation pattern of the first specific wavelength light is projected as the first image capturing region, and outputs the captured image to the shape measurement device 70.

Next, a description will be given of the second image capturing unit 50.

As shown in FIG. 3, the second image capturing unit 50 comprises a radiation device 52, an image capturing device 60, a housing 43, and a cooling and dust control mechanism 74 (see FIG. 6).

The radiation device 52 is a device to radiate the second specific wavelength light with a radiation pattern, and comprises a light emitting portion 54, a radiation pattern generator 56, and a first optical element 58 as shown in FIG. 4.

The light emitting portion 54 is a light emitting device that emits the second specific wavelength light. The light emitting portion 54 may be, for example, configured with a blue light emitting diode or configured with a blue laser diode.

The radiation pattern generator 56 is a member having slits and/or holes formed so as to correspond to the radiation pattern. The radiation pattern generator 56 achieves radiation of the second specific wavelength light with a radiation pattern by passing of the second specific wavelength light emitted by the light emitting portion 54 through the slits and/or holes formed in the radiation pattern generator 56. The radiation pattern in the present embodiment is grating-like as shown in FIG. 5. "Grating-like" here means, for example, fringe-like or having a grating pattern.

The first optical element 58 is at least one optical element to radiate the second specific wavelength light that is emitted from the light emitting portion 54 and passes through the radiation pattern generator 56 to the second radiation region. The first optical element 58 is arranged on a light path from the radiation device 52 housed in the housing 43 to the outside, and is fitted in an attachment hole 92 (see FIG. 7) in a front cover 47 so as to form an outer surface of the housing 43.

The image capturing device 60 captures an image of a region (hereinafter referred to as a "second image capturing region") of the measurement target 100 on which the second specific wavelength light radiated from the radiation device 52 is projected. The image capturing device 60 comprises a second optical element 62, a specific wavelength pass filter 64, and an image capturing element 66.

The second optical element 62 is at least one optical element to collect light from the second image capturing region. The second optical element 62 is arranged on a light path from outside the housing 43 to the image capturing device 60, and is fitted in an attachment hole 93 (see FIG. 7) in the front cover 47 so as to form the outer surface of the housing 43.

The specific wavelength pass filter 64 is a filter that allows passage of light of the second specific wavelength, and blocks light of a wavelength except the second specific wavelength.

The image capturing element 66 is a known image capturing element to form an image, and may include, for example, a CCD image sensor and/or a CMOS image sensor. The image capturing element 66 captures an image of the light that has passed the specific wavelength filter 64.

The housing 43, which is a case having an open space therein, comprises a case body 45, the front cover 47, and two annular members 49. The case body 45 is a case forming a rectangular parallelepiped shape having an open face. The front cover 47 is a plate-like member that covers the open face of the case body 45, and has attachment holes 92 and 93 bored therein. The annular members 49 are ring-shaped members to be fixed to respective peripheral edges of the attachment holes 92 and 93, and each have a thickness in a circumferential direction.

The radiation device 52 and the image capturing device 60 are housed in the open space formed in the housing 43 so as to be held in a specific positional relationship. The specific positional relationship here means a positional relationship that is specified by at least a distance between the radiation device 52 and the image capturing device 60, and an angle (that is, a mounting angle) defined by a central axis of image capturing with respect to a radiation axis of the second specific wavelength light.

That is, the second image capturing unit 50 radiates the radiation pattern of the second specific wavelength light to the second radiation region. Also, the second image capturing unit 50 captures an image of a region of the measurement target 100 on which the radiation pattern of the second specific wavelength light is projected as the second image capturing region, and outputs the captured image to the shape measurement device 70.

Then, the shape measurement device 70 that has acquired the images executes the shape recognition process to thereby measure respective three-dimensional surface shapes of the first image capturing region and the second image capturing region of the measurement target 100. Subsequently, the shape measurement device 70 executes a coordinate integration process to integrate the respective surface shapes of the first image capturing region and the second image capturing region on a single plane to thereby acquire the surface shape of the measurement target 100.

The coordinate integration process here means a known process to integrate respective surface shapes, on the basis of respective captured images, of the first image capturing region and the second image capturing region on a single plane, with reference to specific points (for example, specific four points) that are common to the first image capturing region and the second image capturing region. The coordinate integration process, which is a known process, may be performed with reference to specific points in a part where the first image capturing region and the second image capturing region overlap each other; therefore, no further detailed description will be given here.

### <Cooling and Dust Control Mechanism>

Next, a description will be given of a cooling and dust control mechanism provided to each of the first image capturing unit 20 and the second image capturing unit 50. The cooling and dust control mechanism provided to the first image capturing unit 20 and the cooling and dust control mechanism provided to the second image capturing unit 50 have a common configuration; therefore, in the present embodiment, the cooling and dust control mechanism provided to the first image capturing unit 20 is described, and no description will be given of the cooling and dust control mechanism provided to the second image capturing unit 50.

The cooling and dust control mechanism 74 shown in FIG. 6 is a mechanism that reduces temperature rise in the first image capturing unit 20 and also inhibits attachment of dust on outer surfaces of the first optical element 28 and the second optical element 32.

In order to achieve reduction of temperature rise and inhibition of attachment of dust, the cooling and dust control mechanism 74 comprises a suction portion 76, a fan 78, an air chamber 80, and a blowing portion 83.

The suction portion 76 is a portion of the case body 44, the portion having an opening (hereinafter referred to as an "inlet") formed in the case body 44. It is preferable that the inlet be provided in plurality. The fan 78 is a blower to blow air from the inlet provided in the suction portion 76 to an inside of the housing 42. It is preferable that the fan 78 be provided in plurality.

The air chamber 80 is a chamber provided in the housing 42, and air blown by the fan 78 flows into the air chamber 80. The air chamber 80 is provided with a dust control filter 82 arranged along an air path from the inlet to the inside of the housing 42. The dust control filter 82 here means a known filter that blocks passage of dust and allows passage of air, and may be made of non-woven cloth, for example. It is preferable that the dust control filter 82 in the present embodiment be provided in plurality.

The blowing portion 83 is a mechanism to blow out air that has passed through the dust control filter 82 to the outside of the housing 42. The blowing portion 83 of the present embodiment comprises the front cover 46 and the annular member 48.

As shown in FIG. 7, a plurality of vent holes 84 and 86 are bored in the front cover 46. The vent holes 84 and 86 are formed around the attachment holes 90 and 91, respectively, such that the vent holes 84 are equally spaced from one another and the vent holes 86 are equally spaced from one another.

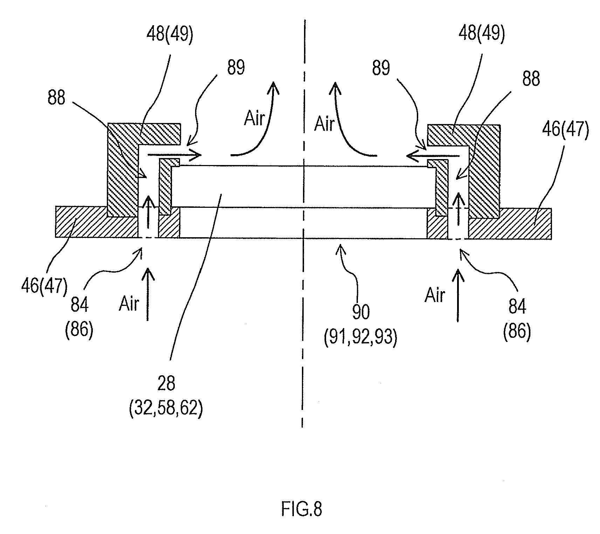

Also, the annular member 48 comprises vent paths 88 as shown in FIG. 8. Each of the vent paths 88 is a hole formed to have an "L-shaped" cross-section when the annular member 48 is the circumferentially and axially sectioned. In the present embodiment, the vent paths 88 are provided in the same number as that of the vent holes 84 and 86. Also, the vent paths 88 each have approximately the same diameter as that of each of the vent holes 84 and 86.

Each of the vent paths 88 has one end thereof that is arranged at a position facing a corresponding one of the vent holes 84 and 86 formed in the front cover 46, and the other end thereof that is directed toward an inner periphery of the annular member 48 so as to be positioned above the outer surface of a corresponding one of the first optical element 28 and the second optical element 32. Such openings directed toward the inner periphery of the annular member 48 functions as the blowing outlets 89.

### <Operation of Cooling and Dust Control Mechanism>

In the cooling and dust control mechanism 74, when the fan 78 operates, air (outside air) flows from outside the housing 42 into the air chamber 80 provided in the housing 42. When an internal pressure in the air chamber 80 is increased by the inflow of air, the air in the air chamber 80 flows through the dust control filter 82 into the housing 42.

The air that has flown into the housing 42 exchanges heat with the radiation device 22 and the image capturing device 30 to thereby cool the radiation device 22 and the image capturing device 30. The air that has cooled the radiation device 22 and the image capturing device 30 passes through the vent holes 84 and 86 provided in the front cover 46, and then flows into the vent paths 88 provided in the annular members 48.

Since the vent holes 84 and 86 as well as the vent paths 88 each have a small passage diameter relative to the open space of the housing 43, the air that has flown into each of the vent paths 88 will have a large air-flow rate. Then, the air with the large air-flow rate is jetted from the openings (that is, the blowing outlets 89), which are directed toward the inner peripheries of the annular members 48, toward the outer surfaces of the optical elements 28 and 32.

### [Effects of Embodiment]

As described above, in the measurement apparatus 1, the image capturing units 20 and 50 respectively radiate the first specific wavelength light and the second specific wavelength light to regions different from each other.

Thus, unlike the prior art, the measurement apparatus 1 eliminates the need to sequentially move one image capturing unit when capturing images of a plurality of regions of the measurement target 100, enabling capturing of images over a wide area of the measurement target 100 at the same time.

Also, in the measurement apparatus 1, the image capturing units 20 and 50 radiate lights having respective (non-overlapping) wavelengths that are different from each other. This may reduce occurrence of interference between the first specific wavelength light from the first image capturing unit 20 and the second specific wavelength light from the second image capturing unit 50.

Accordingly, in the measurement apparatus 1, it is possible to radiate the first specific wavelength light and the second specific wavelength light such that a part of the radiation pattern by the first specific wavelength light from the first image capturing unit 20 overlaps a part of the radiation pattern by the second specific wavelength light from the second image capturing unit 50. Further, in the measurement apparatus 1, each of the image capturing units 20 and 50 captures an image of the image capturing region through the corresponding specific wavelength pass filter 34 or 64 that allows passage of only the wavelength of the light radiated by the image capturing unit 20 or 50 itself.

Accordingly, only the radiation pattern of the light from each of the image capturing units 20 and 50 is reflected to the corresponding captured image.

Consequently, according to the measurement apparatus 1, decrease in measurement accuracy of the measurement target 100 can be inhibited.

According to the measurement apparatus 1, as described above, the three-dimensional shape of the measurement target 100 can be accurately recognized, and time required to recognize the three-dimensional shape of the measurement target 100 can be reduced as much as possible.

Also, according to the measurement apparatus 1, the radiation patterns of the respective lights from the image capturing units 20 and 50 are adapted to partially overlap each other on the measurement target 100. Accordingly, it is possible to easily integrate surface shapes on the basis of the respective images captured by the image capturing units 20 and 50 on a single plane, with reference to specific points (for example, specific four points) in the mutually overlapping part.

Consequently, according to the measurement apparatus 1, it is possible to easily recognize, as a surface shape in one space, the surface shapes in the respective radiation regions that have been recognized from a plurality of images.

Thus, for example, when the measurement apparatus 1 is applied to an inspection process in a production line to produce a large amount of products, it is possible to perform rapid inspection of the surface shapes of the large amount of products.

Further, according to the measurement apparatus 1, a blind area of one image capturing unit can be covered by another image capturing unit, even in a case where the measurement target 100 has a complicated surface shape. According to the measurement apparatus 1, therefore, a surface shape of a measurement target can be recognized accurately even in a case where the measurement target has a complicated surface shape.

The measurement apparatus 1 comprises a cooling and dust control mechanism 74.

According to the cooling and dust control mechanism 74, it is possible to cool the radiation devices 22 and 52 as well as the image capturing devices 30 and 60 by the air that has flown into the respective housings 42 and 43.

By cooling the radiation devices 22 and 52, and the image capturing devices 30 and 60, it is possible to inhibit deformation of the respective housings 42 and 43 resulting from heat generation of the radiation devices 22 and 52, and the image capturing devices 30 and 60. Consequently, according to the measurement apparatus 1, decrease in measurement accuracy of the surface shape of the measurement target 100 can be further surely inhibited.

Moreover, according to the cooling and dust control mechanism 74, the air that has been suctioned into the housing 42 or 43 is jetted from the openings (that is, the blowing outlets 89), which are directed toward the inner peripheries of the corresponding annular members 48 or 49, toward the outer surfaces of the corresponding first optical element 28 or 58, and the corresponding second optical element 32 or 62.

Thus, according to the cooling and dust control mechanism 74, it is possible to inhibit attachment of dust on the outer surfaces of the first optical elements 28 and 58, and the second optical elements 32 and 62.

According to the measurement apparatus 1, since attachment of dust on the outer surfaces of the first optical elements 28 and 58, and the second optical elements 32 and 62 can be inhibited, it is possible to maintain a radiation pattern to be a previously specified pattern and to inhibit reflection of unnecessary noise to a captured image.

Thus, according to the measurement apparatus 1, decrease in measurement accuracy of the surface shape of the measurement target 100 can be further surely inhibited.

### [Other Embodiments]

Although the embodiment of the present invention has been described as above, the present invention is not limited to the above-described embodiment, but may be practiced in various forms within the scope not departing from the subject matter of the present invention.

For example, the first specific wavelength is a wavelength of red light and the second specific wavelength is a wavelength of blue light in the above embodiment, the first specific wavelength and the second specific wavelength are not limited to these wavelengths. That is, the first specific wavelength and the second specific wavelength may be any wavelengths that have non-overlapping bandwidths, and the bandwidths may be not only in a visible light wavelength range, but also in the infrared wavelength range or the ultraviolet wavelength range. Particularly, since farm animals cannot see light in the ultraviolet wavelength range, each of the farm animals can be the measurement target 100, and the measurement apparatus 1 may be used for inspection of how well-fleshed each of the farm animals is.

Also, although the radiation pattern of the light radiated by each of the first image capturing unit 20 and the second image capturing unit 50 is grating-like (striped fringe-like) in the above embodiment, the radiation pattern of the present invention is not limited to that, and may be, for example, dots (in a dot pattern).

Further, although the moire method is exemplified as the shape recognition process to recognize the surface shape of the measurement target 100 in the above embodiment, the shape recognition process of the present invention is not limited to the moire method. Specifically, the shape recognition process of the present invention may be any so-called pattern projection method to measure a shape by projecting a pattern, and may be, for example, a shifting fringe method and/or moire topography.

Moreover, outside air is directly brought into the housings 42 and 43 in the cooling and dust control mechanism 74 of the above embodiment, outside air to be brought into the housings 42 and 43 may be precooled. In this case, precooling of the outside air may be achieved, for example, by cooling with a known air conditioner.

Although the measurement apparatus 1 of the above embodiment comprises the two image capturing units, i.e., the first image capturing unit 20 and the second image capturing unit 50, the measurement apparatus of the present invention may comprise three or more image capturing units.

In this case, the image capturing units provided to the measurement apparatus 1 need to be arranged such that a part of a radiation pattern of light from one of the image capturing units overlaps a part of a radiation pattern of light from at least one of the other image capturing units.

Also, with regard to the image capturing units that radiate the lights with overlapping radiation patterns, the lights radiated by the image capturing units need to have respective non-overlapping wavelength bands.

Further, each of the image capturing units needs to be configured to capture an image of a region of the measurement target 100, to which a radiation pattern of the light from the image capturing unit is radiated, through a filter that allows passage of the corresponding wavelength of the light from the image capturing unit and blocks a wavelength other than the corresponding wavelength.

According to the measurement apparatus 1 as described above, it is possible to measure the surface shape of a measurement target over a wider area in a short time.

An embodiment in which part of the configuration of the above embodiment is omitted as long as the problems to be solved can be solved is included in embodiments of the present invention. Also, an embodiment configured by appropriately combining the above embodiment and a variation is included in embodiments of the present invention. Further, any embodiment that is conceivable without departing from the subject matter of the invention defined by the wording of the claims is included in embodiments of the present invention.

## Claims

1. A measurement apparatus comprising:
at least two or more radiation devices, each radiating a specific wavelength light, which is a light having a specified specific wavelength, with a set radiation pattern;
at least two or more image capturing devices, each being paired with a corresponding one of the radiation devices and arranged such that a positional relationship with the corresponding one of the radiation devices is a previously specified specific positional relationship, and capturing an image of a radiation region of a measurement target on which the radiation pattern of the specific wavelength light radiated by the corresponding one of the radiation devices is projected; and
a measurement device that measures a surface shape of the measurement target in each of the radiation regions, on the basis of an image captured by each of the image capturing devices and of the specific positional relationship between each of the image capturing devices and the paired radiation device;
wherein each of the radiation devices radiates the specific wavelength light having one of specific wavelengths specified to be different from one another, such that a part of the radiation pattern overlaps a part of a radiation pattern from another one of the radiation devices on the measurement target, and
wherein each of the image capturing devices captures an image of the radiation region of the measurement target on which the radiation pattern of the specific wavelength light radiated by the paired radiation device is projected, through a specific wavelength pass filter that allows passage of the light having the specific wavelength of the paired radiation device and blocks light of a wavelength except the specific wavelength.

2. The measurement apparatus according to claim 1, further comprising:
a housing that houses the radiation device and the image capturing device paired with each other while retaining the specific positional relationship therebetween; and
a cooling device that cools the radiation device and the image capturing device housed in the housing with air that is brought into the housing.

3. The measurement apparatus according to claim 2, further comprising:
a first optical element that is provided to each of a plurality of the housings on a light path from the radiation device housed in the housing so as to form an outer surface of the housing;
a second optical element that is provided to each of the plurality of the housings on a light path from outside the housing to the image capturing device housed in the housing so as to form an outer surface of the housing; and
a blowing device that blows out the air that has cooled the radiation device and the image capturing device housed in the housing by the cooling device toward outer surfaces of the first optical element and the second optical element.
